Europäisches Patentamt

European Patent Office

Office européen des brevets

(19)

(11) Numéro de publication : **0 509 895 A1**

# (12) DEMANDE DE BREVET EUROPEEN

(21) Numéro de dépôt : **92401030.9**

(22) Date de dépôt : **13.04.92**

(51) Int. Cl.⁵ : **G01N 29/18**, G01N 29/10

---

(30) Priorité : **15.04.91 FR 9104586**

(43) Date de publication de la demande :
**21.10.92 Bulletin 92/43**

(84) Etats contractants désignés :
**AT BE CH DE DK ES FR GB GR IT LI LU NL PT SE**

(71) Demandeur : **SOLLAC**
**Immeuble Elysées La Défense, 29 Le Parvis**
**F-92800 PUTEAUX (FR)**

(71) Demandeur : **Filipputti, Reynald**
**Les Tamaris 1, Avenue Frédéric Mistral**
**F-13110 Port-de-Bouc (FR)**

(72) Inventeur : **Filipputti, Reynald**
**Les Tamaris 1, Avenue Frédéric Mistral**
**F-13110 Port-de-Bouc (FR)**
Inventeur : **Vallerich, Gérard**
**135 rue Darius Milhaud**
**F-13270 Fos Sur Mer (FR)**

(74) Mandataire : **Obolensky, Michel et al**
**c/o CABINET LAVOIX 2, place d'Estienne d'Orves**
**F-75441 Paris Cédex 09 (FR)**

---

(54) **Procédé et dispositif de contrôle non destructif par ultrasons de pièces en matériaux réfractaires.**

(57) Le dispositif de contrôle comporte deux pinces de mesure (6,7) comportant respectivement une sonde émettrice (3) d'ondes ultrasonores et une sonde réceptrice d'ondes ultrasonores après leur propagation dans une pièce (2) à contrôler, des capteurs de pression (19) autorisant les opérations de mesure en assurant le connexion électrique des pinces (6,7) à un micro-ordinateur (5) et des sondes (8,9) de mesure dans l'air d'une dimension de la pièce (2) à contrôler, portées par des bras d'appui (25) solidaires des pinces (6,7).

FIG.1

EP 0 509 895 A1

La présente invention concerne un procédé de contrôle non destructif par ultrasons en temps réel des dimensions et de la constitution de pièces façonnées en matériaux réfractaires ainsi qu'un dispositif pour la mise en oeuvre dudit procédé.

Dans le domaine des produits réfractaires, il est connu que les opérations de remplacement et de détection des pièces usagées sur un outil de production industrielle, comme par exemple un convertisseur d'aciérie, sont longues et coûteuses et nécessitent toujours un arrêt dudit outil.

Aussi, devient-il indispensable de s'assurer de la fiabilité des pièces en matériaux réfractaires avant leur mise en oeuvre.

Parmi les caractéristiques prises en compte pour la qualification des produits réfractaires, on retient essentiellement :

- l'homogénéité de plusieurs produits destinés à un même outil de production,
- les effets d'orientation dûs au pressage, notamment dans les matériaux réfractaires au graphite;
- les variations de densité,
- les défauts d'homogénéité interne,
- les variations de résistance.

On connait une technique de mesure de la vitesse de propagation des ultrasons dans un matériau réfractaire. Celle-ci est basée sur le principe de la mesure du temps de passage d'un train d'ondes ultrasonores, de fréquences comprises entre 50 et 100 KHz, émises par un émetteur appliqué sur une face de la pièce à tester et reçues par un récepteur placé sur la face opposée.

On sait alors qu'il existe une corrélation entre le temps de passage du train d'ondes et la constitution ou texture du matériau réfractaire.

Habituellement, lorsqu'on veut s'assurer de la conformité dimensionnelle et qualitative des pièces façonnées en matériaux réfractaires par rapport à un cahier des charges, on effectue, au cours d'une première étape, une mesure des trois côtés d'une pièce, longueur, largeur et épaisseur, au moyen d'un pied à coulisse et on transcrit manuellement sur un support papier les valeurs obtenues.

Au cours d'une deuxième étape, on procède à une mesure du temps de passage d'un train d'ondes ultrasonores entre chacune des faces opposées deux à deux de la pièce.

Deux sondes à ultrasons, une émettrice et une réceptrice, sont appliquées manuellement par un opérateur sur chacune des deux faces opposées et permettent d'obtenir trois valeurs de temps de propagation pour les trois axes de la pièce. Celles-ci sont à leur tour prises en compte manuellement et transcrites dans un premier fichier informatique en vue de leur traitement ultérieur.

Au cours de cette deuxième étape, on détermine la vitesse de propagation des ondes ultrasonores selon chacun des trois axes à partir des valeurs dimensionnelles et temporelles précédemment mesurées.

L'interprétation, par traitement informatique, de ces données permet alors de contrôler les dimensions de la pièce et la qualité de sa texture.

Finalement, tous les résultats sont transférés manuellement dans un second fichier informatique pour assurer le suivi dans le temps de la régularité de qualité des matériaux.

La technique de mesure ainsi décrite présente de nombreux inconvénients :

- L'opérateur, en maintenant les sondes appliquées sur deux faces opposées de la pièce, exerce une pression sur celle-ci et induit par la même, une erreur sur la mesure du temps de propagation du train d'ondes.
- L'information obtenue à partir de cette mesure sur la qualité de la texture du matériau est alors erronée.
- L'erreur est voisine de 15% et peut même atteindre 20%.
- La durée nécessaire au contrôle de la pièce en matériau réfractaire est assez élevée.

En effet, en premier lieu, il faut effectuer deux mesures différentes dans chacun des trois axes de la pièce et, en second lieu, les résultats de ces mesures ainsi que les données obtenues après traitement informatique doivent être transcrites manuellement dans des fichiers informatiques.

- La mise en oeuvre du procédé occupe plusieurs personnes.
- Du fait que le contrôle comporte des opérations manuelles, donc dépendantes de l'attention des opérateurs, le risque d'erreurs est considérablement élevé.

Ce risque est d'autant plus élevé que les opérations durent dans le temps.

La présente invention vise à remédier aux inconvénients précédemment cités en proposant un procédé et un dispositif pour le mettre en oeuvre, permettant de contrôler en temps réel les dimensions et la constitution de pièces en matériaux réfractaires avec une grande fiabilité, alliée à une simplicité opératoire et à une rapidité du contrôle.

L'invention a ainsi pour objet un procédé de contrôle non destructif des dimensions et de la constitution de pièces façonnées en matériaux réfractaires, dans lequel :

- on effectue une mesure d'au moins une dimension d'une pièce,
- on mesure à l'aide de deux sondes à ultrasons, l'une émettrice et l'autre réceptrice, le temps de propagation d'un train d'ondes ultrasonores émises par la sonde émettrice à travers la pièce, dans chacune des trois dimensions.
- on calcule pour chaque couple de mesures dimensions-temps, la vitesse de propagation du train d'ondes,
- on en déduit d'éventuels défauts de constitution des réfractaires, ledit procédé étant caractérisé en ce que :

- les mesures de la dimension considérée et du temps de propagation du train d'ondes ultrasonores sont effectuées simultanément et la vitesse de propagation correspondante et les défauts de constitution de la pièce sont déduits desdites mesures en temps réel, par des moyens électroniques.

Le procédé selon l'invention permet de contrôler, en temps réel, la conformité dimensionnelle des pièces à un cahier des charges, de détecter les défauts internes aux matériaux réfractaires.

L'invention a également pour objet un dispositif pour la mise en oeuvre du procédé précédemment décrit, caractérisé en ce qu'il comprend :

- deux pinces de mesure, l'une d'elles, appelée pince d'émission, étant munie d'une sonde émettrice et de moyens émetteurs de mesure dans l'air d'une dimension de la pièce, l'autre, appelée pince de réception, étant munie d'une sonde réceptrice et de moyens récepteurs de mesure,

- des moyens électroniques reliés aux pinces de mesure,

- chaque pince de mesure étant formée par un corps longitudinal comportant à une extrémité,

- un logement dans lequel est assujettie élastiquement la sonde à ultrason, correspondante,

- des moyens de support sur lesquels trois capteurs de pression d'axes parallèles à l'axe de la sonde sont montés élastiquement, lesdits capteurs et la sonde présentant des extrémités libres, localisées en permanence dans un même plan dit d'application et faisant saillie par rapport au corps,

- une plaque de guidage percée d'alésages destinés à guider respectivement la sonde et les capteurs,

- des moyens d'appui pour les moyens de mesure, placés sur le corps et en amont des moyens de support,

- des butées liées aux moyens de support étant alignées avec les capteurs et destinées à établir un contact électrique par pression mécanique à une valeur prédéterminée avec les extrémités opposées aux extrémités libres des capteurs, le déclenchement des mesures ne s'effectuant que lorsque le contact électrique est établi dans chacune des pinces,

- ledit corps longitudinal comportant une poignée à son extrémité opposée à la sonde.

Le dispositif selon l'invention présente en outre les caractéristiques suivantes :

- la poignée est placée dans l'alignement du corps longitudinal,

- le logement est placé dans l'alignement du corps longitudinal,

- le corps longitudinal a la forme d'un cylindre,

- le logement a la forme d'un cylindre de même diamètre que celui du corps,

- la poignée a la forme d'un manchon cylindrique de diamètre inférieur à celui du corps, ledit manchon étant raccordé audit corps par une partie tronconique.

Selon d'autres caractéristiques de l'invention:

- la sonde est rappelée élastiquement hors du logement au moyen d'un ressort calibré, coopérant à une de ses extrémités avec une collerette solidaire de la sonde, à proximité de son extrémité extérieure et à son autre extrémité, avec une butée fixée dans le logement et traversée par la sonde.

- la butée mécanique du fond du logement est formée d'une embase au centre de laquelle est pratiquée une ouverture circulaire permettant le passage d'une extrémité de la sonde, la collerette ayant un diamètre supérieur à celui de l'ouverture circulaire,

- les trois capteurs de pression sont montés élastiquement sur les moyens de support par l'intermédiaire de trois ressorts calibrés,

- les moyens de support sont formés par une collerette fixée au corps autour du logement,

- les butées placées sur la collerette sont des éléments cylindriques fixés dans des trous traversant ladite couronne dans son épaisseur, par l'intermédiaire de manchons isolants correspondants,

- la plaque de guidage est une bride circulaire de diamètre sensiblement égal à celui de la collerette,

- les moyens d'appui pour les moyens de mesure sont constitués par au moins un bras fixé perpendiculairement au corps,

- les moyens émetteurs et récepteurs de mesure dans l'air d'une dimension de la pièce sont constitués par deux sondes à ultrasons, respectivement appelées sondes dimensionnelles émettrice et réceptrice.

L'invention sera mieux comprise à l'aide de la description qui va suivre, donnée uniquement à titre d'exemple et faite en se référant aux dessins annexés, sur lesquels :

- la Fig.1 est une vue schématique d'un mode de réalisation du dispositif selon l'invention,

- la Fig. 2 est une vue schématique en coupe longitudinale d'un mode de réalisation d'une pince de mesure selon l'invention,

- la Fig.3 est une vue à plus grande échelle, schématique en coupe longitudinale d'une liaison plot-butée,

- la Fig. 4 est une vue schématique en coupe d'une embase contenue dans le logement pour la sonde,

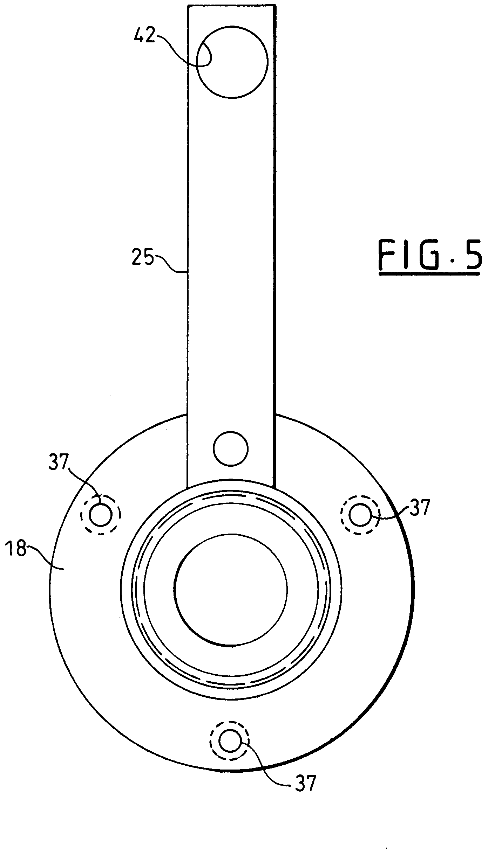

- la Fig. 5 est une vue schématique de dessus d'un bras d'appui pour une sonde de mesure dans l'air,

- la Fig.6 est une vue partielle de côté d'une variante des moyens d'appui pour les moyens de mesure du dispositif de l'invention;

- la Fig.7 est une coupe suivant la ligne 7-7 de la Fig.6; et

- la Fig.8 est une vue de côté d'une pince munie des moyens d'appui des Fig.6 et 7 en place sur une pièce à contrôler.

Le procédé de contrôle non destructif suivant l'invention s'inscrit dans une démarche d'optimisation de la qualité des produits réfractaires fabriqués.

On prélève tout d'abord quelques échantillons de pièces façonnées en matériaux réfractaires dans un lot de pièces destinées à une même utilisation pour vérifier leurs caractéristiques conformément à un cahier des charges. Les pièces sont de formes et de qualités diverses : brique standard ou brique de forme, au graphite ou autre.

Pour effectuer le contrôle des échantillons, on procède à une mesure des dimensions des pièces et de la vitesse de propagation de trains d'ondes ultrasonores selon chacune des dimensions.

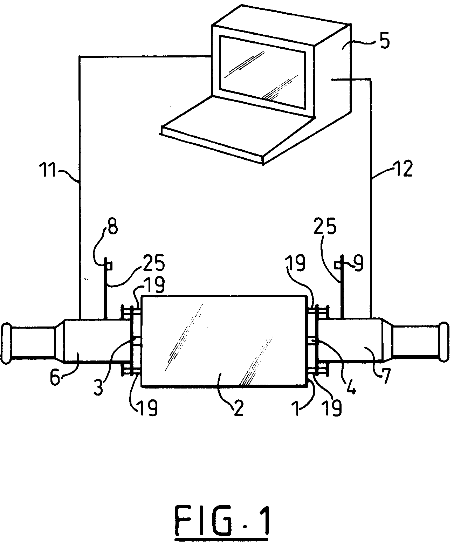

Le procédé conforme à l'invention est réalisé comme illustré à la Fig.1 par les étapes suivantes :

- on effectue entre deux faces 1 opposées d'une pièce 2 en matériau réfractaire, une mesure dans l'air de la distance séparant lesdites faces 1,

- on mesure simultanément à l'aide de deux sondes à ultrasons 3,4, l'une émettrice 3 et l'autre réceptrice 4, le temps de propagation d'un train d'ondes ultrasonores émises par la sonde émettrice 3 entre les deux faces 1, l'opération de mesure étant effectuée pour chacune des trois dimensions de la pièce 2.

Bien entendu, l'invention s'applique également à des mesures réalisées selon une ou deux dimensions de la pièce,

- on calcule de manière quasi instantanée, pour chaque dimension de la pièce 2, une mesure de la vitesse de propagation du train d'ondes ultrasonores, à l'aide de moyens électroniques 5 appropriés,

- on en déduit, en temps réel, des renseignements sur l'existence de défauts internes au matériau réfractaire ainsi que sur la conformité dimensionnelle de la pièce 2.

Dans le mode de réalisation du procédé selon l'invention représenté à la Fig. 1, on mesure dans l'air la distance séparant les deux faces 1 de la pièce 2 au moyen de deux autres sondes à ultrasons qui vont être décrites par la suite.

Selon des variantes, on peut envisager d'effectuer cette mesure au moyen de lasers, par voie optique ou par réflectométrie.

Les fréquences utilisées en 'ultrasons sont prises dans une gamme allant de 30 à 125 KHz pour les ondes émises dans le matériau réfractaire 3 et, dans une gamme allant de 150 à 300 KHz pour les ondes se propageant dans l'air.

Ainsi, ce procédé permet de suivre de manière simple et rapide, le niveau de qualité d'un produit et de pouvoir corriger d'éventuelles dérives sur les lignes de fabrication desdits produits.

Un dispositif pour la mise en oeuvre du procédé précédemment décrit est représenté schématiquement à la Fig.1.

Ce dispositif comprend :

- deux pinces de mesure 6,7 dont l'une 6, appelée pince d'émission, est munie de la sonde à ultrasons émettrice 3 et de moyens émetteurs 8 de mesure dans l'air d'une dimension de la pièce, l'autre 7 appelée pince de réception, est munie de la sonde à ultrasons réceptrice 4 et de moyens récepteurs 9 associés aux moyens émetteurs 8,

- des moyens électroniques 5 reliés aux pinces de mesure 6,7.

Chacune des pinces 6,7 est destinée à être placée en regard de faces opposées d'une pièce façonnée en matériau réfractaire 2.

Les sondes à ultrasons 3,4 sont placées au contact de chaque face 1, alors que les moyens 8,9 de mesure dans l'air d'une dimension de la pièce, représentée par la distance séparant les deux faces opposées, sont placées parallèlement aux sondes 3,4 et ne sont séparées l'une de l'autre que par l'air.

Dans le mode de réalisation décrit en référence à la Fig.1, les moyens émetteurs et récepteurs 8,9 de mesure dans l'air d'une dimension de la pièce 2 sont constitués par deux sondes à ultrasons que l'on nomme, respectivement, sondes dimensionnelles émettrice et réceptrice.

Par ailleurs, les sondes à ultrasons 3,4 pour les mesures de vitesse dans les matériaux réfractaires utilisent des ultrasons de basse fréquence, entre 30 et 125 KHz, alors que les sondes dimensionnelles 8,9 utilisent des ultrasons de haute fréquence, entre 150 et 300 KHz.

Les moyens électroniques 5 sont, par exemple constitués par un micro-ordinateur 5, celui-ci étant relié aux deux pinces de mesure par des câbles amovibles 11,12.

Un logiciel approprié effectue les calculs en temps réel et affiche les résultats sous forme de tableaux et de courbes, ce qui permet de vérifier instantanément la cohérence des mesures par rapport à une référence donnée.

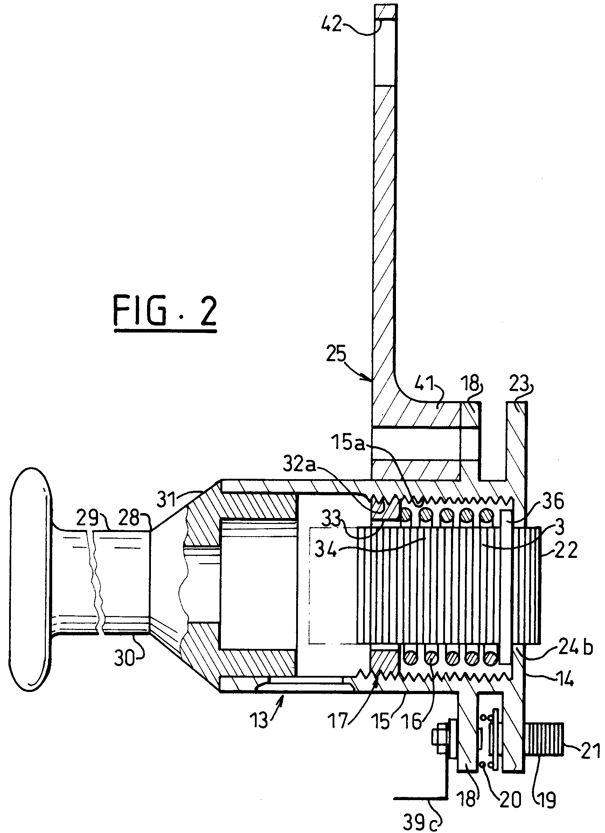

Comme représentée à la Fig.2, chacune des pinces de mesure 6,7 est formée par un corps cylindrique 13 comportant à une extrémité 14 :

- un logement cylindrique 15 de même diamètre que celui du corps 13, et dans lequel est assujettie élastiquement, au moyen d'un ressort calibré 16, une sonde à ultrasons 3 de basse fréquence,

- des moyens de support 18 disposés autour de la sonde 3 et sur lesquels trois capteurs de pression 19, d'axes parallèles à l'axe de la sonde 3, et appelés plots, sont montés élastiquement par l'intermédiaire de trois ressorts calibrés 20 et avec un décalage angulaire de 120°.

Les plots 19 et la sonde 3 présentent des extrémités libres 21, 22 situées en permanence dans un même plan, dit d'application, qui est extérieur au logement 15.

La face 1 de la pièce façonnée en matériau réfractaire 2 contre laquelle la pince 6 est appliquée se confond sensiblement avec le plan d'application dans la mesure où les pièces présentent toujours une certaine rugosité de surface.

- une plaque de guidage 23 perpendiculaire au corps 13 est percée de trois alésages 24a, destinés à guider les plots 19 et d'un alésage 24b destiné à guider la sonde 3.

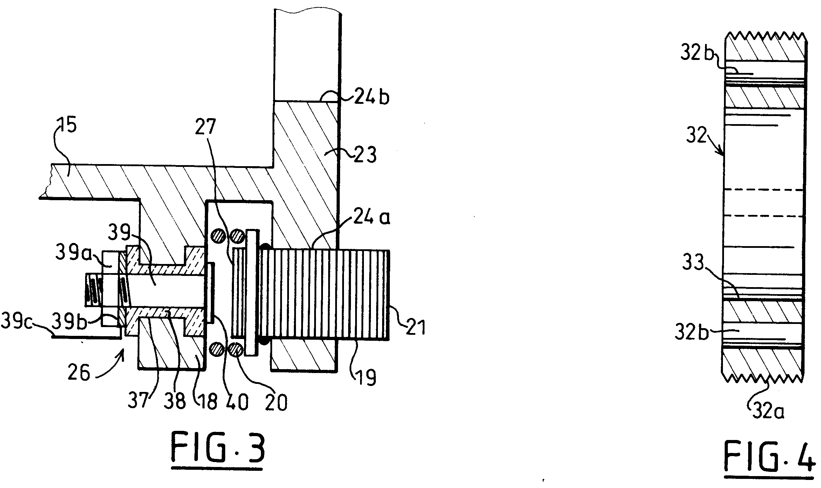

Les extrémités libres 21 et 22 des plots 19 et de la sonde 3 dépassent toujours hors des alésages 24a, 24b (Fig.3).

- des moyens d'appui ou de support 25 pour les moyens de mesure 8,9 sont placés sur la paroi cylindrique du logement 15 en arrière des moyens de support 18.

- trois butées 26, représentées à la Fig.3, liées aux moyens de support 18, sont alignées avec les plots 19 et sont destinées à établir un contact électrique par pression mécanique d'un opérateur, à une valeur prédéfinie, avec les extrémités 27 des plots opposées à leurs extrémités libres 21.

Le corps cylindrique 13 comporte à son extrémité 28 opposée au logement 15, une poignée 29.

Le logement 15 est coaxial avec le corps 13 et la poignée 29.

Cette disposition est la mieux adaptée compte tenu de l'effort que l'opérateur doit appliquer contre chaque face 1 de la pièce 2.

Comme représenté à la Fig.2, la poignée 29 a la forme d'un manchon cylindrique 30 de diamètre inférieur à celui du corps 13.

Comme représenté à la Fig.4, la butée mécanique 17 contenue dans le logement 15 est formée d'une embase 32 munie d'un filetage extérieur 32a, au centre de laquelle est pratiquée une ouverture circulaire 33.

L'embase 32 est en outre pourvue de trous axiaux 32b de réception de doigts d'une clé (non représentée), destinée à régler la position de la butée 17 sur la portion filetée intérieurement 15a du logement 15.

La sonde à ultrasons 3 de basse fréquence a la forme d'un cylindre qui est muni sur sa surface longitudinale 34, à proximité de son extrémité extérieure au corps d'une collerette 36 dont le diamètre est supérieur à celui de l'ouverture circulaire 33 de la butée 17.

Ainsi, lors du contact des extrémités libres des plots 21 et de la sonde 22 avec une face 1 de la pièce 2, l'extrémité de la sonde qui est équipée de la collerette 36 coulisse dans l'embase 32 à l'encontre de l'action du ressort 16 dont l'extrémité opposée à la collerette 36 prend appui sur l'embase 32.

La sonde à ultrasons considérée est, par exemple, constituée de pastilles piézoélectriques. La sonde 4 a une structure analogue.

Les moyens de support 18 fixés autour du cylindre constituant le logement 15 sont formés par une collerette.

Dans l'épaisseur de cette collerette 18, qui est fixée au corps par exemple par soudage, sont réalisés des trous 37 décalés par exemple de 120° et placés en regard de chacun des alésages 24a de la plaque de guidage 23.

Les trous 37 sont garnis d'un manchon isolant 38 par exemple en Nylon et des éléments métalliques de forme cylindrique, appelés butées 39, munis d'une tête plate 40 sont engagés dans les trous 37. Les butées 39 sont fixées dans les trous 37 au moyen d'écrous 39a avec interposition de cosses 39b reliées chacune à un conducteur électrique 39c de liaison avec le micro-ordinateur 5 (Fig.1).

La tête plate 40 permet d'établir le contact électrique avec le plot 19 placé en alignement avec l'élément 26 et l'alésage 24 correspondant comme représenté à la Fig.3.

Lorsque l'opérateur exerce une force d'application par l'intermédiaire de la pince 6 et 7 sur les faces 1 de la pièce 2, les plots 19 et les sondes 3 et 4 coulissent respectivement dans leurs alésages 24a, 24b, et le logement 15 jusqu'à ce que les plots 19 viennent en contact mécanique avec les butées 39 (Fig.3).

Les plots ou capteurs de pression 19 détectent la pression imposée et, si celle-ci est comprise dans une gamme prédéterminée de pressions, le contact électrique est établi.

Toutefois, le déclenchement des mesures ne peut s'effectuer que lorsque les contacts électriques sont établis dans chacune des deux pinces de mesures 6 et 7.

Le nombre de capteurs 19 est optimal puisqu'il permet d'obtenir le meilleur contact possible sur une face 1 de la pièce 2.

Quatre capteurs ne permettent pas d'obtenir le contact idéal compte tenu du fait que la pièce 2 présente toujours des surfaces rugueuses.

Un tel mécanisme est très avantageux puisqu'il permet d'assurer la constance de la force d'application sur les faces 1 de la pièce 2 donc de s'affranchir des erreurs de manipulation de l'opérateur et de reproduire fidèlement les mêmes conditions expérimentales à chaque mesure.

La fiabilité du dispositif permet d'effectuer les contrôles sur des pièces 2 à hauts risques et dont le coût de fabrication est élevé.

La plaque de guidage 23 est une bride circulaire dont le diamètre est sensiblement égal à celui de la collerette 18.

Les trois alésages 24a sont placés aux sommets d'un triangle équilatéral et ont des dimensions correspondantes à celles des capteurs de pression 19.

L'alésage central 24b a un diamètre correspondant à celui de la sonde à ultrasons 3 de basse fréquence correspondante.

Les moyens d'appui ou de support 25 pour les sondes dimensionnelles 8, 9 sont constitués par au moins un bras fixé, par exemple par soudage, perpendiculairement au cylindre formant le logement 15 de chaque pince 6,7.

Le bras 25 est une pièce de faible épaisseur, présentant à sa partie inférieure, un socle 41 de forme arrondie lui permettant d'être soudé sur le corps cylindrique 13 et, à son extrémité libre un trou 42 dans l'épaisseur dudit bras 25 en vue de recevoir une sonde dimensionnelle 8,9.

Les sondes dimensionnelles 8,9 sont constituées de pastilles piézoélectriques et ont la forme d'éléments héxagonaux munis d'une tige filetée et d'un écrou (non représentés).

Les sondes 8,9 sont donc boulonnées sur les bras 25.

Ainsi, les sondes dimensionnelles 8,9 sont parallèles aux sondes à ultrasons 3,4 de basse fréquence.

Dans le mode de réalisation de l'invention, un seul bras 25 est fixé au corps 13, mais, selon une variante, chaque pince 6,7 est équipée de deux bras 25 diamétralement opposés.

Cette variante est avantageuse du fait du non parallélisme des faces 1 des pièces en matériau réfractaire .

De manière générale, il faut savoir que les faces ne sont jamais rigoureusement parallèles et les pièces 2 sont même réalisées avec une certaine conicité pour des raisons techniques de démoulage.

Lorsque les pièces 2 présentent cette légère conicité, les mesures ne sont pas perturbées.

Par contre, si le défaut de parallélisme est exagéré, on doit effectuer deux mesures successives, l'une avec le bras 25 dans une direction, l'autre avec le bras 25 dans la direction opposée et ensuite établir une moyenne de ces mesures.

Avantageusement, une pince 6,7 munie de deux bras 25 diamétralement opposés pourvus chacun d'une sonde de mesure dans l'air, permet de s'affranchir de la double opération de mesure et des risques d'erreurs encourus par la manipulation.

Un gain de temps est également réalisé sur chaque mesure.

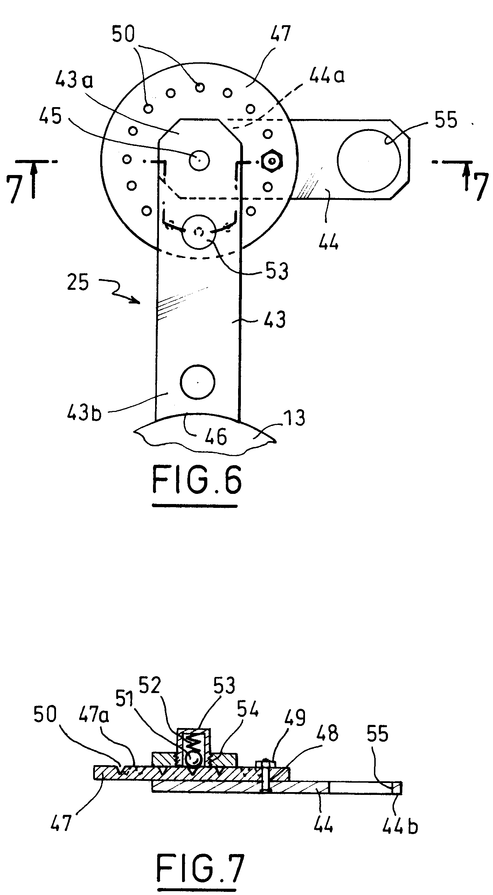

Selon une autre variante de l'invention représentée aux Fig.6 à 8, une pince 6,7 est munie d'un bras 25 qui est formé de deux parties 43,44 articulées et reliées par une de leurs extrémités 43a, 44a au moyen d'un axe 45 dit de pivotement parallèle à l'axe de la sonde 3.

Plus précisément, les parties 43 et 44 sont en recouvrement partiel par une de leurs extrémités 43a, 44a.

Comme représenté à la Fig.6, la première partie 43 du bras 25 comporte, à une de ses extrémités 43b opposée à celle 43a qui est en contact avec la seconde partie dudit bras, un socle 46 de forme arrondie lui permettant, par exemple, d'être soudé sur le corps cylindrique 13.

La deuxième partie 44 du bras 25 s'articule autour de l'axe de pivotement 45.

Une plaque 47 ayant par exemple la forme d'un disque est insérée entre les extrémités communes 43a et 44a des deux parties 43 et 44 qui sont en recouvrement et est solidaire de la partie mobile 44 du bras 25, par exemple au moyen d'une tige 48 et d'un écrou 49.

Le disque 47 comporte sur une de ses grandes faces 47a, une pluralité de cavités 50 ayant la forme d'entailles.

Ces cavités 50 sont régulièrement réparties sur une couronne du disque centrée sur l'axe de pivotement 45.

Une de ces cavités 50 peut servir de logement à la tige 48 qui solidarise le disque 47 avec la partie mobile 44 du bras 25.

La partie fixe 43 du bras 25 est équipée de moyens 51, 52 d'immobilisation du disque 47 afin de maintenir la partie mobile 44 dans une position fixe.

Ces moyens 51,52 sont disposés en regard de la face du disque 47 qui est munie des cavités 50 et à une distance déterminée de l'axe de pivotement 45 correspondant à la distance entre ledit axe et une cavité 50 quelconque ceci afin de coopérer avec ladaite cavité.

Les moyens 51,52 d'immobilisation du disque 47, placés en-dessous de l'axe de pivotement 45, comportent une bille 51 par exemple métallique, montée sur un ressort d'axe perpendiculaire à la face 47a du disque 47 qui est munie des cavités 50. La bille 51 et le ressort 52 sont logés à l'intérieur d'une douille 53 sensiblement cylindrique qui est ouverte à une de ses extrémités.

Cette extrémité ouverte de la douille 53 est engagée dans un trou 54 d'axe parallèle à l'axe de pivotement 45 qui traverse la partie fixe 43 du bras 25, ladite extrémité étant ainsi en contact avec la face 47a du disque 47.

Le ressort 52 prend appui par une de ses extrémités contre le fond de la douille 53.

Sous l'action du ressort 52 de forte raideur , la bille 51 est poussée contre la face 47a du disque et, dès qu'une cavité 50 se présente en regard de la bille, celle-ci s'engage partiellement dans ladite cavité, empêchant ainsi la rotation du disque 47 et donc de la partie mobile 44 du bras 25.

Il convient de noter que les cavités 50 ont de préférence une forme d'entaille qui permet de recevoir une partie du volume de la bille 51, l'autre partie étant logée dans le trou 54 de la partie fixe 43 du bras 25 bloquant ainsi la rotation du disque 47 (Fig.7).

La partie mobile 44 du bras 25 présente à son extrémité libre 44b, c'est à dire opposée à celle 44a qui est en contact avec la partie fixe 43, un trou 55 ménagé dans l'épaisseur de ladite partie en vue de recevoir une sonde dimensionnelle 8,9 (Fig.1).

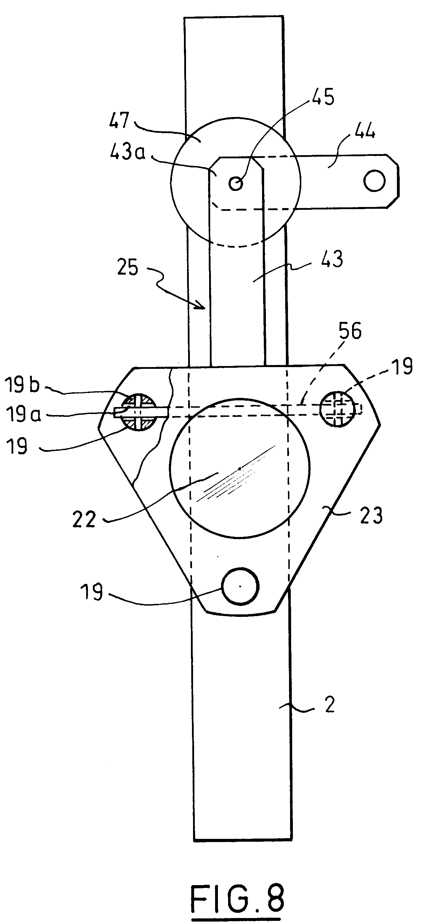

Chaque pièce 6,7 selon l'invention, munie d'un tel bras 25 en deux parties 43 et 44, comporte une barre métallique 56 reliant mécaniquement et électriquement par leurs extrémités libres deux des trois plots 19 disposés dans la plaque de guidage 23, ainsi que représenté à la Fig.8. Chacun des deux plots 19 ou capteurs de pression est partiellement évidé sur une partie centrale 19a de manière à former deux bords 19b de part et d'autre de ladite partie centrale.

Les deux parties centrales évidées 19a des deux plots 19 reliés par la barre 56 sont alignés l'un avec l'autre permettant ainsi de recevoir la barre métallique 56 entre les deux bords 19b du chaque plot.

Pour fixer la barre métallique 56 aux plots 19, il est par exemple prévu sur chaque plot 19 d'aménager un trou à travers chaque bord 19b ainsi qu'un trou à chaque extrémité de ladite barre 56 qui traverse celle-ci dans son épaisseur, les trois trous précités étant alignés lorsque la barre est en place. Il suffit alors d'introduire une goupille dans ces trous pour réaliser la fixation de l'ensemble.

Le bord de la barre 56 destiné à venir en contact d'une pièce 2 à contrôler présente un profil en forme de couteau.

La barre métallique 56 ainsi fixée et l'extrémité libre du troisième plot 19 sont disposés en permanence dans le même plan d'application faisnt saillie par rapport au logement 15 du corps 13 de chaque pince.

La variante qui vient d'être décrite permet d'effectuer un contrôle non destructif des dimensions et de la constitution de pièces façonnées en matériaux réfractaires dont une des dimensions est inférieure à la distance entre deux plots 19.

Si l'on désigne la plus petite dimensoin d'une pièce 2 à contrôler par le terme d'épaisseur, l'opérateur doit positionner chacune des pinces 6,7 en regard de l'épaisseur en amenant la barre métallique 56 et le troisième plot 19 en contact avec ladite épaisseur.

Dans ce cas, la barre 56 qui vient en appui contre le côté de petite dimension de la pièce 2, répartit les efforts sur les deux capteurs de pression 19 qu'elle relie.

Pour effectuer la mesure dans l'air d'une autre dimension de la pièce 2, lorsque celle-ci a une valeur telle qu'elle masque les extrémités des bras 25 des deux pinces de mesure, les bras 25 étant disposés avec leurs parties 43 et 44 alignées, l'opérateur fait basculer la partie mobile 44 du bras 25 de chaque pince 6,7 d'un même angle afin que les sondes dimensionnelles 8,9 soient en vis-à-vis et ne soient plus masquées l'une vis-à-vis de l'autre par la pièce 2.

Afin de contrôler tous les types de pièces en matériaux réfractaires et ce, quelles que soient leurs dimensions, on place le bras 25 en retrait par rapport à la bride circulaire 23, sensiblement à l'aplomb de l'embase du logement.

En effet, la Demanderesse a constaté que pour des pièces 2 de petites dimensions, on ne peut mesurer la distance séparant les deux faces 1 si les sondes 8,9 sont trop proches l'une de l'autre.

Ainsi, en plaçant le bras 25 à la place indiquée, on peut adapter le contrôle à toutes les dimensions de pièces.

Lorsque les mesures sur deux faces 1 opposées d'une pièce 2 sont terminées, l'opérateur en est averti par un signal sonore.

Les pinces 6,7 sont, par exemple, réalisées en aluminium anodisé et les plots 19 sont en acier.

La présente invention apporte un gain de temps considérable à l'opération de contrôle et permet à un seul opérateur d'effectuer les mesures.

On obtient ainsi en temps réel, une information fiable sur les qualités dimensionnelles et structurelles des pièces testées.

Ce procédé et son dispositif de mise en oeuvre présentent l'avantage supplémentaire de permettre une automatisation complète de la prise des mesures sur les chaines de fabrication et, ainsi, d'agir rapidement en conséquence en cas de détection de défauts sur les pièces.

Bien que dans l'exemple décrit et représenté, l'invention soit considérée comme appliquée au contrôle de pièces en matériaux réfractaires, on comprend aisément qu'elle s'applique également au contrôle de pièces réalisées en d'autres matériaux.

**Revendications**

1. Procédé de contrôle non destructif des dimensions et de la constitution de pièces façonnées en matériaux réfractaires (2), dans lequel :
   - on effectue une mesure d'au moins une dimension d'une pièce (2),
   - on mesure à l'aide de deux sondes à ultrasons (3,4), l'une émettrice (3) et l'autre réceptrice (4), le temps de propagation d'un train d'ondes ultrasonores émises par la sonde émettrice (3) à travers la pièce (2), dans ladite dimension,
   - on calcule pour chaque couple de mesures dimension-temps, la vitesse de propagation du train d'ondes,
   - on en déduit d'éventuels défauts de constitution des matériaux réfractaires, ledit procédé étant caractérisé, en ce que :
   - les mesures de la dimension considérée et du temps de propagation du train d'ondes ultrasonores, sont effectuées simultanément, et en ce que la vitesse de propagation correspondante et les défauts de constitution de la pièce (2) sont déduits desdites mesures en temps réel par des moyens électroniques (5).

2. Dispositif de contrôle non destructif des dimensions et de la constitution de pièces façonnées en matériaux réfractaires pour la mise en oeuvre du procédé selon la revendication 1, caractérisé en ce qu'il comprend:

- deux pinces de mesure (6,7), l'une d'elles (6) appelée pince d'émission, étant munie de la sonde émettrice (3) et de moyens émetteurs (8) de mesure dans l'air d'une dimension de la pièce (2), l'autre (10) appelée pince de réception, étant munie de la sonde réceptrice (4) et de moyens récepteurs (9) de mesure,

- des moyens électroniques reliés aux pinces de mesure (6,7), chaque pince de mesure (6,7) étant formée par un corps longitudinal (13) comportant à une extrémité (14), un logement (15) dans lequel est assujettie élastiquement la sonde à ultrasons (3,4),

- des moyens de support (18) autour de la sonde (3) et sur lesquels trois capteurs de pression (19) d'axes prallèles à l'axe de la sonde (3) sont montés élastiquement, lesdits capteurs de pression (19) et la sonde (3) présentant des extrémités libres (21,22) localisées en permanence dans un même plan dit d'application et faisant saillie par rapport au logement (15),

- une plaque de guidage (23) perpendiculaire au logement (15) étant percée d'alésages (24a,24b) destinés à guider respectivement la sonde (3) et les plots (19),

- des moyens d'appui (25) pour les moyens de mesure (8,9) placés sur le logement (15), et

- trois butées (26) liées aux moyens de support (18) étant alignés avec les plots (19) et destinées à établir un contact électrique par pression mécanique à une valeur prédéterminée avec les extrémités (27), des plots (19) opposées aux extrémités libres (21), en vue de déclencher les mesures,

- ledit corps longitudinal (13) comportant à son extrémité opposée à la sonde (3) une poignée (29).

3. Dispositif selon la revendication 2, caractérisé en ce que la poignée (29) est placée dans l'alignement du corps longitudinal (13).

4. Dispositif selon les revendications 2 et 3, caractérisé en ce que le logement (15) est placé dans l'alignement du corps longitudinal (13).

5. Dispositif selon la revendication 2, caractérisé en ce que le corps longitudinal (13) a la forme d'un cylindre.

6. Dispositif selon les revendications 2 et 5, caractérisé en ce que le logement (15) a la forme d'un cylindre de même diamètre que celui du corps (13).

7. Dispositif selon les revendications 2 à 6, caractérisé en ce que la poignée (29) a la forme d'un manchon cylindriue (30) de diamètre inférieur à celui du corps (13), ledit manchon (30) étant raccordé audit corps (13) par une partie tronconique (31).

8. Dispositif selon la revendication 2, caractérisé en ce que la sonde à ultrasons (3,4), est rappelée élastiquement hors du logement au moyen d'un ressort calibré (16) coopérant à une de ses extrémités avec une collerette (36) solidaire de la sonde à proximité de son extrémité extérieure au logement, et à son autre extrémité avec une butée (17) fixée dans le logement (15) et traversée par la sonde (3).

9. Dispositif selon les revendications 7 et 8, caractérisé en ce que la butée (17) est formée d'une embase (32) au centre de laquelle est pratiquée une ouverture circulaire (33) permettant le passage d'une extrémité (35) de la sonde, la collerette 36 solidaire de la sonde ayant un diamètre supérieur à celui de l'ouverture circulaire (33).

10. Dispositif selon la revendication 2, caractérisé en ce que les trois plots (19) sont montés élastiquement sur les moyens de support (18) par l'intermédiaire de trois ressorts calibrés (20).

11. Dispositif selon les revendications 2 à 6, caractérisé en ce que les moyens de support (18) sont formés par une collerette fixée autour du logement (15).

12. Dispositif selon les revendications 2 et 10, caractérisé en ce que les butées (26) sont des éléments cylindriques fixés dans des trous (37) traversant la couronne (18), dans son épaisseur, par l'intermédiaire de manchons isolants (38).

13. Dispositif selon les revendications 2 et 11, caractérisé en ce que la plaque de guidage (23) est une bride circulaire de diamètre sensiblement égal à celui de la collerette (18).

14. Dispositif selon la revendication 2, caractérisé en ce que les moyens d'appui (25) pour les moyens de mesure (8,9) sont constitués par au moins un bras fixé perpendiculairement au logement (15) de chaque pince (6,7).

15. Dispositif selon la revendication 14, caractérisé en ce que le bras (25) de chaque pince (6,7) est formé de deux parties articulées (43,44), reliées par une de leurs extrémités (43a, 44a) au moyen d'un axe (45) de pivotement (45) parallèle à l'axe de la sonde (3), la première partie (43) du levier étant fixée au corps (13) de la pince (6,7) et la seconde (44) étant mobile autour dudit axe de pivotement.

16. Dispositif selon la revendication 15, caractérisé en ce que chaque bras (25) comporte des moyens de positionnement angulaire des deux parties (43,44) du bras (25) l'un par rapport à l'autre, comprenant une plaque (47) insérée entre les deux extrémités communes (43a, 44a) des parties du bras (25) et solidaire de la partie mobile (44), ladite plaque étant munie sur une de ses faces (47a) d'une pluralité de cavités (50) réparties sur une couronne centrée sur l'axe de pivotement (45), la partie fixe (43) du bras (25) étant équipée en regard de la face (47a) comportant les cavités et en-dessous dudit axe, de moyens (51,52) d'immobilisation de la plaque destinés à coopérer avec une des cavités.

17. Dispositif selon la revendication 16, caractérisé en ce que les moyens (51,52) d'immobilisation de la plaque sont formés d'une bille (51) montée sur un ressort (52) d'axe perpendiculaire à ladite plaque (47) et destinée à s'engager partiellement dans une des cavités (50) de la plaque (47) sous l'action du ressort.

18. Dispositif selon l'une des revendications 2,10 et 15 à 17, caractérisé en ce que chaque pince (6,7) comporte une barre métallique (56) reliant deux des trois plots (19) par leurs extrémités et destinée à répartir les efforts sur les deux plots qu'elle relie lors de la mise en place du dispositif sur une dimension d'une pièce à contrôler inférieure à la distance entre deux plots (19), ladite barre (50) et l'extrémité libre du troisième plot (19) étant disposées en permanence dans un même plan d'application faisant saillie par rapport au logement (15).

19. Dispositif selon l'une quelconque des revendications 2 à 18, caractérisé en ce que les moyens émetteurs et récepteurs (8,9) de mesure dans l'air d'une dimension de la pièce (2) sont constitués par deux sondes à ultrasons, respectivement appelées sondes dimensionnelles émettrice (8) et réceptrice (9).

# FIG·1

# FIG. 2

FIG.4

FIG.3

FIG.5

FIG.6

FIG.7

FIG.8

Office européen
des brevets

**RAPPORT DE RECHERCHE EUROPEENNE**

Numero de la demande

EP 92 40 1030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-8 904 524 (THE EXPERT SYSTEM TECHNOLOGIES, INC.) * Abrégé; figure * --- | 1,2 | G 01 N 29/18 G 01 N 29/10 |
| A | US-A-4 070 917 (NIKLAS et al.) * Abrégé * --- | 1,2 | |
| A | C.R. ACAD. SC. PARIS, vol. 268, série B, 10 mars 1969, pages 716-718, Paris, FR; G. SALVINI et al.: "Ultrasons, - Méthode différentielle de mesure de la vitesse de propagation d'ultrasons" * Le document en entier * ----- | 1 | |

DOMAINES TECHNIQUES RECHERCHES (Int. Cl.5)

G 01 N

Le présent rapport a été établi pour toutes les revendications

| Lieu de la recherche | Date d'achèvement de la recherche | Examinateur |
|---|---|---|
| LA HAYE | 02-06-1992 | KOUZELIS D. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)